# EUROPEAN PATENT SPECIFICATION

(11) **EP 1 669 264 B1**
(45) Date of publication and mention of the grant of the patent: **28.03.2012**
(21) Application number: 04772210.3
(22) Date of filing: 26.08.2004
(51) Int. Cl.: B60R 25/04

(54) **REMOTE CONTROL KEY FOR VEHICLE**
FERNBEDIENUNGSSCHLÜSSEL FÜR FAHRZEUG
CLE A TELECOMMANDE POUR AUTOMOBILE

(30) Priority: 29.09.2003 JP 2003337339
(43) Date of publication of application: 14.06.2006
(73) Proprietor: HONDA MOTOR CO., LTD., Tokyo 107-8556 (JP); HONDALOCK MFG. CO., LTD., Miyazaki-gun, Miyazaki 880-0293 (JP)
(72) Inventor: KONNO, Takeshi, K. K. Honda Gijutsu Kenkyusho, Wako-shi, Saitama 351-0193 (JP); ONOZUKA, Tadashi, K. K. Honda Gijutsu Kenkyusho, Wako-shi, Saitama 351-0193 (JP); WATARAI, Sadanori, Hondalock Mfg. Co., Ltd., Miyazaki-gun, Miyazaki 880-0293 (JP)
(74) Representative: HOFFMANN EITLE
(86) International application number: PCT/JP2004/012254
(87) International publication number: WO 2005/030541

(56) References cited:
- EP-A- 0 823 520
- EP-A- 0 908 589
- EP-A- 1 147 953
- JP-A- 10 317 754
- JP-A- 2002 247 656
- JP-A- 2002 320 278
- JP-A- 2002 370 621
- JP-A- 2003 064 918
- JP-U- 06 067 224

## Description

### TECHNICAL FIELD

The invention relates to a remote controlling key (hereinafter referred to as "remote key") for a vehicle and in particular, to a remote key suitable for a vehicle starting system capable of unlocking the lock of a vehicle by short-distance wireless communication.

### BACKGROUND ART

A keyless entry system for a four-wheel automobile has been known in which when a person who has an exclusively designed remote key (for example, a card key having a wireless communication function) comes near to a locked vehicle and enters a predetermined verification area, a door is unlocked and an engine is brought to a state of being ready to start. In this keyless entry system, when the person goes away from the vehicle with the card key, the door is locked and the engine cannot be started. This keyless entry system is disclosed in, for example, Japanese Unexamined Patent Publication No. 10-317754.

A keyless entry system that has a normal mode of transmitting a remote control signal to a vehicle side to prevent a malfunction in the control of the system or to reduce the consumption of a battery and a transmission output stop mode of stopping the output of the remote control signal has been known (Japanese Unexamined Patent Publication No. 2003-64918).

EP 0 908 589 A2 relates to a remote controlling key for a vehicle comprising a single manual switching means for stopping or activating a function of transmission/receiver means that receives a startup signal and transmits identification information.

EP 0 823 520 A2 relates to an authentication means with an authentication target unit and a user side authentication key unit for user authentication vis-a-vis the target unit, wherein the key unit communicates during an authentication communication process electronically with the target unit. PROBLEM TO BE SOLVED In a four-wheel automobile having doors, even if an engine is brought to a state of being ready to start by the function of a remote key, an engine startup operating procedure including steps of opening the door first and then, for example, of pushing a knob needs to be performed. Hence, even if an operation of unlocking a lock and an operation of bringing the engine to a state of being ready to start are performed on the vehicle side by conducting communication with the remote key, a preparatory operation for starting the engine can not be performed without the intentional operation of a remote key possessor, that is, a driver.

However, in a motorcycle having no door, an engine startup operation can be performed only by a driver coming near to the vehicle with a remote key. Hence, even if the driver does not intend to start the engine, a preparatory operation for starting the engine can be performed immediately when the remote key comes near to the vehicle. For example, when the driver comes near to the vehicle to wash or maintain the vehicle, a preparation for starting the engine is started. To be specific, an engine start operating knob is unlocked.

### SUMMARY OF THE INVENTION

The present invention is defined in claim 1. Further optional features are defined in the dependent claims.

An advantage obtainable with embodiments of the invention is to provide, in a keyless engine starting system, a remote key for a vehicle that can prevent a preparation of starting an engine from being started unless a driver performs an operation of starting the engine.

With embodiments of the invention it is possible to stop the function of the transmission/receiver means of the remote key or to activate the function, that is, to bring the transmission/receiver means into a state capable of conducting communication, by means of the switching means. With this, in a case where a driver does not intend to start the engine, even if the driver comes into a verification area with a remote key, the keyless engine starting system does not operate. When the driver does not drive the vehicle for a long time, the driver can stop the function of the transmission/receiver means to prevent the electricity consumption of the power source within the remote key. It is possible to recognize, by means of indicating means, whether or not the transmission/receiver function of the remote key is stopped.

According to a preferred feature, if the switching means is not pushed for relatively a long time, the function of the transmission/receiver means of the remote key is not switched, so that it is possible to switch the state of the transmission/receiver means on the basis of a intentional operation.

### BRIEF DESCRIPTION OF THE DRAWINGS

In the following, reference will now be made to the accompanying drawings, which illustrate, by way of example only, ways in which the invention may be carried out, in which:
Fig. 1 is a general block diagram of a keyless engine starting system in accordance with one embodiment of the invention,
Fig. 2 is a block diagram to show the construction of a remote key,
Fig. 3 is a flow chart to show a processing in the remote key based on the operation of a push button.
Fig. 4 is a schematic view to show the outline of a processing of the remote key,
Fig. 5 is an external view of a knob switch,
Fig. 6 is an operating timing chart of the keyless engine starting system, and
Fig. 7 is a perspective view of a motorcycle to which the remote key of the invention is applied.

### DETAILED DESCRIPTION

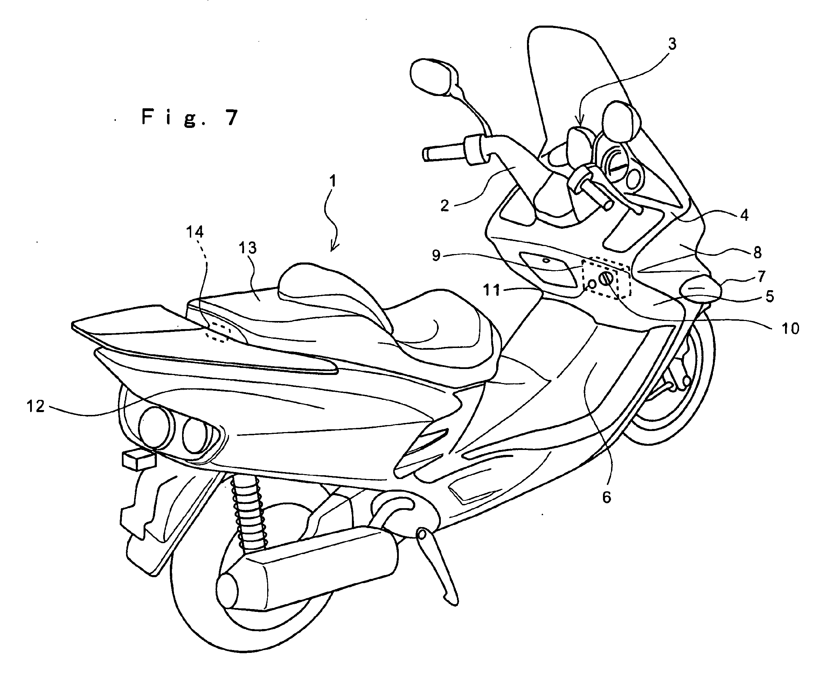

One embodiment of the invention will be described with reference to the drawings. Fig. 7 is an external perspective view of a scooter type motorcycle to which a keyless engine starting system in accordance with one embodiment of the invention is applied. In the drawing, a steering handle, that is, a handlebar 2 turnably supported by a vehicle frame (not shown) is arranged on the front portion of the scooter type motorcycle 1 . The periphery of the base of the handlebar 2 is covered with a panel 4 in which instruments 3 are arranged. The panel 4 is connected to a floor part 6 via a longitudinal panel 5. The front portion of the panel 4 (front side of a vehicle) is covered with a front cowl 8 having a headlamp (not shown) and turn signal lamps 7. A steering lock module 9 is housed in a space covered with the panel 4 and the front cowl 8. The steering lock module 9 has an engine starting switch (hereinafter referred to as "knob switch") 10 whose operating portion, that is, knob is exposed to the panel 4. The steering lock module 9 also has a mechanism that engages a lock bar driven by the operation of this knob switch 10 with a lock hole formed in the shaft of the handlebar 2 to make the handlebar 2 unable to turn, and a seat unlocking switch 11. As the concrete structure of the steering lock can be adopted, for example, a structure disclosed in Japanese Unexamined Patent Publication No. 9-301239.

The floor part 6 is further connected to a rear cowl 12. A seat 13 is disposed on the top of the rear cowl 12. The seat 13 also serves as a lid for covering a storage box of a helmet and the like and a fuel tank (both not shown) that are covered with the rear cowl 12. The seat 13 is freely opened or closed so as to perform a function as a lid and has an electrically operated locking device 14 operated by a solenoid.

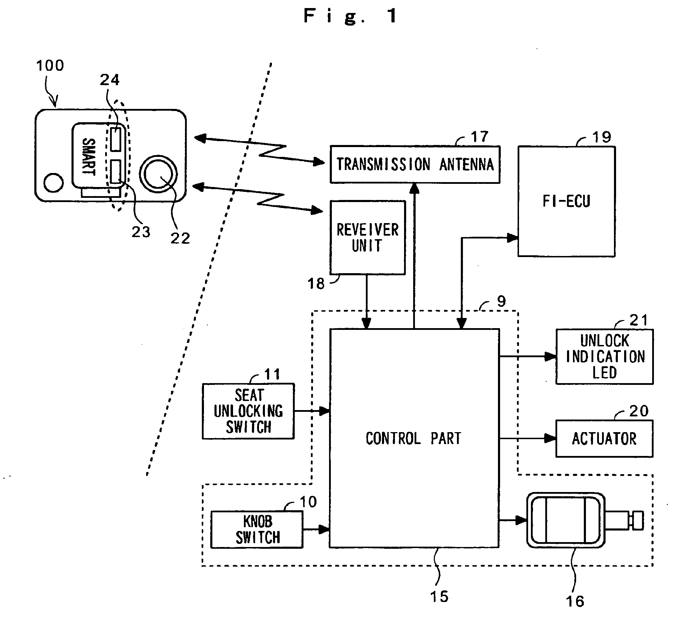

Fig. 1 is the general system construction view of a keyless engine starting system including the steering lock module 9. The steering lock module 9 is composed of a control part 15 including a microcomputer, the knob switch 10, the seat unlocking switch 11, and a solenoid 16 for unlocking a lock to prevent the knob switch 10 from turning. A transmitting antenna 17 and a receiving unit 18 for conducting communication with a remote key 100, a fuel injection control unit (hereinafter referred to as "ECU") 19, and an actuator 20 for unlocking the seat locking device 14 are connected to the control part 15. Further, an LED 21 for indicating the unlocking of the steering lock can be connected to the control part 15. The indicator LED 21 can be provided, for example, on the panel 4.

The remote key 100 has a push button 22, an indicator lamp 23, and an indicator lamp 24. It is recommended that the indicator lamp 23 and the indicator lamp 24 be constructed of LEDs. The functions of the indicator lamp 23 and the indicator lamp 24 will be later described.

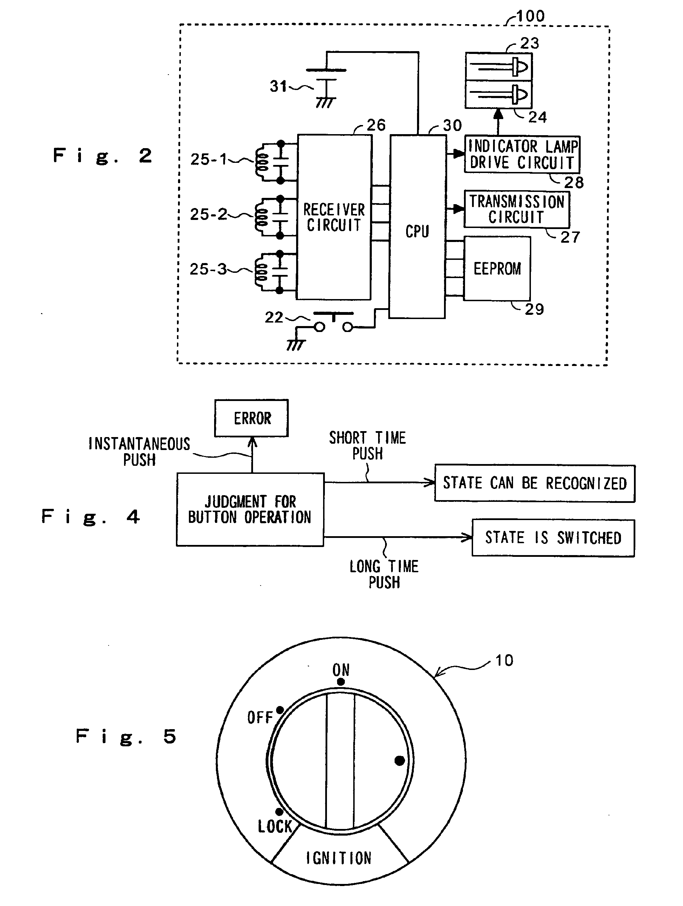

Fig. 2 is a block diagram to show the construction of the remote key 100. The remote key 100 has a communication function of conducting communication with the steering lock module 9 to transmit ID information to the steering lock module 9. The remote key 100 includes a receiver circuit 26 to which a plurality of antennas 25-1, 25-2, 25-3 for allowing non-directional transmission and receiver are connected, a transmission circuit 27, and an indicator lamp drive circuit 28 for driving the indictor lamp (green LED) 23 and the indicator lamp (red LED) 24, an EEPROM 29 as a storage device for storing various kinds of data, and a CPU 30 for controlling these constituent elements. The remote key 100 is driven by a built-in power source 31. The power source 31 is, for example, a lithium battery. Signals correspond to the state of the push button 22 are inputted to the CPU 30.

The CPU 30 has a function of allowing or not-allowing receiver from the steering module 9 in response to the state of the push button 22. In other words, by operating the push button 22 in a predetermined manner, the CPU 30 can be made to respond to or neglect a transmission signal from the steering lock module 9.

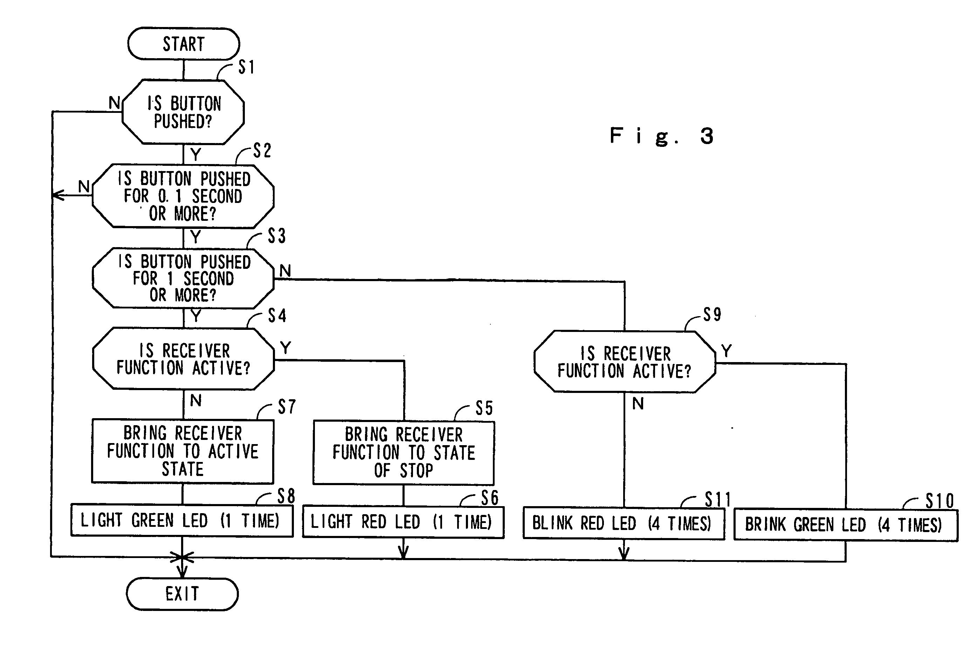

Fig. 3 is a flow chart to show the processing of the CPU 30 based on the operation of the push button 22. In Fig. 3, it is determined at step S1 whether or not the push button 22 is pushed and if this determination result is affirmative, the sequence proceeds to step S2. It is determined at step S2 whether or not the push button 22 is pushed continuously for a first predetermined time T (for example, 0.1 second) or more. If this determination result is affirmative, it is determined that the operation of the push button 22 is an instantaneous operation, that is, a short time period push operation, and the sequence proceeds to step S3. It is determined that an operation performed for a time shorter than the time T is an error and the sequence passes this flow of process. It is determined at step S3 whether or not the push button 22 is pushed continuously for a second predetermined time T1 (T1 > T: for example, 1 second) or more. If this determination result is affirmative, it is determined that the operation of the push button 22 is a long-time operation (a long push) and the sequence proceeds to step S4.

It is determined at step S4 whether or not the present state of the receiver circuit 26 of the remote key 100 is active, that is, in a standby state of receiver. If the state of the receiver circuit 26 is active, the sequence proceeds to step S5 where the receiver circuit 26 is brought to a state of stop, that is, a state in which function is stopped. To show that the receiver circuit 26 is brought to the state in which function is stopped, the sequence proceeds to step S6 where the red LED 24 is lit. Here, the state of illumination of this red LED 24 is finished in a predetermined short time, that is, the red LED 24 is lit only instantaneously.

On the other hand, if the determined result at step S4 is negative, the sequence proceeds to step S7 where the receiver circuit 26 is brought to an active state, that is, a standby state of receiver. To show that the receiver circuit 26 is brought to the standby state of receiver, the sequence proceeds to step S8 where the green LED 23 is lit. Here, the state of illumination of this green LED 23 is finished in a predetermined short time, that is, the green LED 23 is lit only instantaneously.

If the determination result at step S3 is negative, that is, if the operation of the push button 22 is a short-time operation that is not elongated to a long push, the sequence proceeds to step S9 where it is determined whether or not the receiver circuit 26 is in the standby state of receiver. If the determination result at step S9 is affirmative, the sequence proceeds to step S10 where the green LED 23 is blinked to show that the receiver circuit 26 is in the standby state of receiver. The number of blinks is set at, for example, four. If the determination result at step S9 is negative, the sequence proceeds to step S11 where the red LED 24 is blinked to show that the receiver circuit 26 is in the state in which function is stopped. The number of blinks is set at, for example, four.

Fig. 4 is a block diagram to summarize the processings in Fig. 3. As shown in the drawing, in a case where the push button 22 is operated only instantaneously (for example, less than 0.1 second) by mistake, the operation is neglected and regarded as an error and if the push button 22 is operated for a short time, the operation is regarded as an intentional operation, which can be recognized by the indicator lamp showing the present state of the receiver circuit 26. Further, if the push button 22 is pushed for a long time, the receiver circuit 26 is switched between the state in which function is stopped and the standby state of receiver, and this switching of the receiver circuit 26 is indicated.

If any one of the following processings is performed, the receiver circuit 26 can be brought to the state of stop: firstly, the power of the receiver circuit 26 is turned off; secondly, even if receiver is conducted, the CPU 30 is not started, that is, is not brought to a run mode; and thirdly, even if the CPU 30 is started, the CPU 30 is not made to perform a processing of checking ID information.

In the keyless engine starting system shown in Fig. 1, when the push button 22 is operated to make the receiver circuit 26 of the remote key 100 active and a driver comes into a verification area with the remote key 100, the entire system operates. When the receiver circuit 26 is in the state of stop, the system does not operate. Hence, when the driver goes out of the verification area with the remote key 100, the keyless engine starting system is in an initial state in which each lock device is locked.

Fig. 5 shows one example of the knob switch 10. In Fig. 5, in the initial state, the knob switch 10 is at a lock position. In this state, the knob switch 10 is locked and can be pushed but can not be turned. When the knob switch 10 is pushed, communication with the remote key 100 is started and ID information is checked and if the ID information is verified, the knob switch 10 can be turned. When the knob switch 10 is turned to an ON position, communication is conducted with the ECU 19 and the ID information is checked between the ECU 19 and the handle lock module 9. If the ID information is verified, the steering lock is unlocked and the engine is brought to a state in which it is allowed to start and a function of the switch 11 for unlocking the seat lock device 14 is also made active. When the knob switch 10 is turned to a starting position (ignition), operations of starting the engine, that is, the driving of a motor for starting the engine, the injecting of fuel, and igniting operation are started. In place of setting the knob switch 10 at the starting position, it is also recommended that another starting switch be provided. For example, another starting switch can be provided near the grip of the handlebar 2.

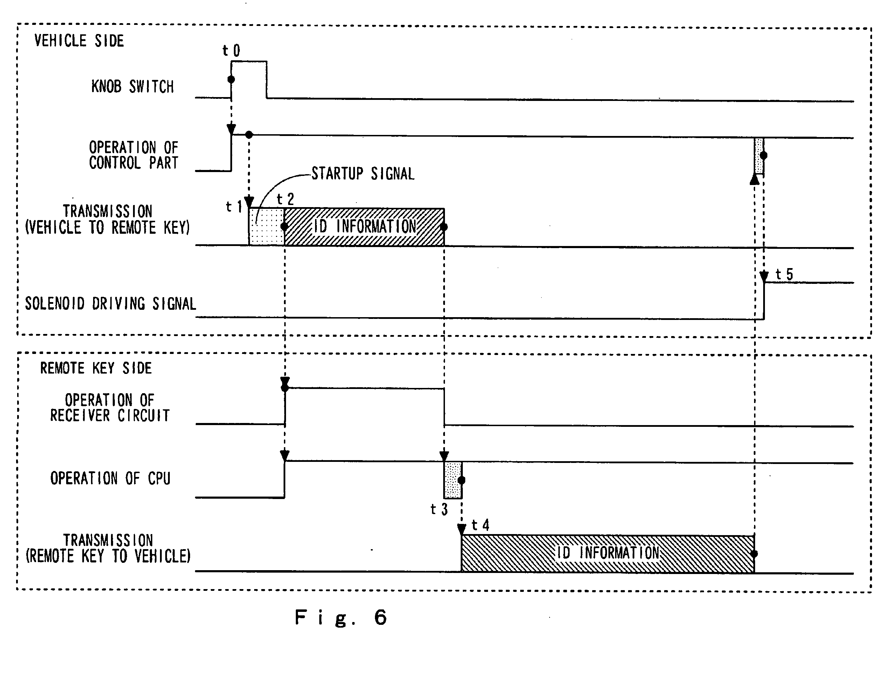

Fig. 6 is a timing chart to show the operation of the keyless engine starting system. The general operation of the keyless engine starting system will be described with reference to Fig. 1 and Fig. 6. First, when the knob switch 10 is pushed at a timing t0, the control part 15 starts. Then, the control part 15 outputs a startup signal at a timing t1 and transmits ID information at a timing t2.

The receiver circuit 26 of the remote key 100 starts in response to the startup signal of the control part 15 and the CPU 30 also starts at the same time. The remote key 100 receiving the ID information before a timing t3 transmits the ID information at a timing t4 . The control part 15 checks the transmitted ID information against the received ID information and if the ID information is verified, the solenoid 16 is operated at a timing t5 to stop preventing the knob switch 10 from turning. When preventing the knob switch 10 from turning is stopped, the seat unlocking switch 11 is brought to an operable state and when this seat unlocking switch 11 is pushed, the solenoid 20 for unlocking the seat locking device 14 is operated.

In this embodiment, the push button 22 is used to switch the state of the receiver circuit 26 of the remote key 100, but in place of this push button 22, for example, a switch for sliding a knob between an ON position and an OFF position can be used. This sliding switch can be easily recognized from the front and the side.

In a case where the receiver circuit 26 receives the ID information after the push button 22 is pushed for a long time when the receiver circuit is active, in place of stopping the function of the receiver circuit, data different from the predetermined ID information can be transmitted back. This is because even if the vehicle-mounted unit 1 receives the data different from the predetermined ID information, the vehicle-mounted unit 1 does not bring the knob switch 10 to an operable state.

The invention can be used not only for the above-described motorcycle but also for a wide variety of vehicles in which knob switches are not covered such as four-wheel vehicle, agriculture machine, and construction machine. The knob switch is not limited to this embodiment. In short, any switch can be used if it can be used as a switch for a keyless engine starting device.

## Claims

1. A remote controlling key (100) for a motorcycle of the type in which identification information is transmitted in response to a startup signal from the motorcycle (1) in a verification area set for the motorcycle to bring an engine starting switch provided in the motorcycle to an operable state, the remote controlling key comprising:
a transmission/receiver means (26, 27) comprising a receiver circuit (26), the transmission/receiver means (26, 27) being configured to transmit identification information in response to the start up signal;
a switching means (22) configured to stop or activate a function of the transmission/receiver means; and
an indicating means (23, 24) configured to indicate a state in which the function of the transmission/receiver means has been stopped and a state in which the function of the transmission/receiver means has been activated, wherein
the switching means (22) is configured to switch the function of the receiver circuit (26) when it is operated continuously for at least a first predetermined period and the indicating means (23, 24) is configured to indicate the state of the function of the receiver circuit (26) after being switched; and
the remote controlling key (100) is configured to neglect operation of the switching means (22) and regard operation as an error when the switching means (22) is operated shorter than a second predetermined period shorter than the first predetermined period.

2. The remote controlling key (100) for the motorcycle as claimed in claim 1, wherein the indicating means (23, 24) is configured to indicate the state of the receiver circuit (26) when the switching means (23, 24) is operated continuously for at least the second predetermined period and shorter than the first predetermined period.

3. The remote controlling key (100) for the motorcycle as claimed in any one of the preceding claims, wherein the vehicle is a scooter type motorcycle (1).

4. The remote controlling key (100) for the motorcycle as claimed in any one of the preceding claims, wherein the indicating means (23, 24) is comprised of a couple of LED lamps, where one of the lamps illuminates in one color to indicate function stopping state of the transmission/receiver means and the other of the lamps illuminates in another color to indicate function activate state of the transmission/receiver means.

## Patentansprüche

1. Fernsteuerungsschlüssel (100) für ein Motorrad von dem Typus, bei dem eine Identifizierungsinformation aufgrund eines Startsignals von dem Motorrad (1) innerhalb eines Identifikationsgebiets, das für das Motorrad eingestellt ist, übertragen wird, um einen Motorstartschalter, der in dem Motorrad vorgesehen ist, in einen betätigbaren Zustand zu bringen, der Fernsteuerungsschlüssel mit:
einer Übertragungs-/Empfängereinrichtung (26, 27) mit einem Empfängerschaltkreis (26), wobei die Übertragungs-/Empfängereinrichtung (26, 27) dafür ausgestaltet ist, die Identifikationsinformation in Abhängigkeit von einem Startsignal zu übertragen;
einer Schalteinrichtung (22), die dafür ausgestaltet ist, eine Funktion der Übertragungs-/Empfängereinrichtung auszuschalten oder zu aktivieren; und
einer Anzeigeeinrichtung (23, 24), die dafür ausgestaltet ist, einen Zustand, in dem die Funktion der Übertragungs-/Empfängereinrichtung ausgeschaltet wurde, und einen Zustand, in dem die Funktion der Übertragungs-/Empfängereinrichtung aktiviert wurde, anzuzeigen, wobei
die Schalteinrichtung (22) dafür ausgestaltet ist, die Funktion des Empfängerschaltkreises (26) zu schalten, wenn sie durchgehend für wenigstens eine erste vorher festgelegte Dauer betätigt wird, und die Anzeigeeinrichtung (23, 24) dafür ausgestaltet ist, den Zustand der Funktion des Empfängerschaltkreises (26) anzuzeigen, nachdem sie geschaltet wurde; und
der Fernsteuerungsschlüssel (100) dafür ausgestaltet ist, eine Betätigung der Schalteinrichtung (22) zu ignorieren und die Betätigung als einen Fehler zu betrachten, wenn die Schalteinrichtung (22) kürzer als eine zweite vorher festgelegte Dauer betätigt wird, welche kürzer ist als die erste vorher festgelegte Dauer.

2. Fernsteuerungsschlüssel (100) für das Motorrad nach Anspruch 1, bei dem die Anzeigeeinrichtung (23, 24) dafür ausgestaltet ist, den Zustand des Empfängerschaltkreises (26) anzuzeigen, wenn die Schalteinrichtung (23, 24) kontinuierlich für wenigstens die zweite vorher festgelegte Dauer und kürzer als die erste vorher festgelegte Dauer betätigt wird.

3. Fernsteuerungsschlüssel (100) für das Motorrad nach einem der vorhergehenden Ansprüche, bei dem das Fahrzeug ein Motorrad (1) vom Motorrollertyp ist.

4. Fernsteuerungsschlüssel (100) für das Motorrad nach einem der vorhergehenden Ansprüche, bei dem die Anzeigeeinrichtung (23, 24) aus einem Paar LED-Lampen besteht, wobei eine der Lampen in einer Farbe leuchtet, um einen ausgeschalteten Funktionszustand der Übertragungs-/Empfängereinrichtung anzuzeigen, und die andere Lampe in einer anderen Farbe leuchtet, um einen aktivierten Funktionszustand der Übertragungs-/Empfängereinrichtung anzuzeigen.

## Revendications

1. Clé à télécommande (100) pour une moto du type où des informations d'identification sont transmises en réponse à un signal de démarrage provenant de la moto (1) dans une zone de vérification prévue pour la moto afin d'amener un commutateur de démarrage de moteur prévu dans la moto dans un état de fonctionnement, la clé à télécommande comprenant :
des moyens de transmission/de réception (26, 27) comprenant un circuit de réception (26), les moyens de transmission/de réception (26, 27) étant configurés pour transmettre des informations d'identification en réponse au signal de démarrage ;
un moyen de commutation (22) configuré pour arrêter ou activer une fonction des moyens de transmission/de réception ; et
des moyens indicateurs (23, 24) configurés pour indiquer un état où la fonction des moyens de transmission/de réception a été arrêtée et un état où la fonction des moyens de transmission/de réception a été activée, où
le moyen de commutation (22) est configuré pour commuter la fonction du circuit de réception (26) lorsqu'il est mis en service en permanence pendant au moins une première période prédéterminée et les moyens indicateurs (23, 24) sont configurés pour indiquer l'état de fonctionnement du circuit de réception (26) après sa commutation ; et
la clé à télécommande (100) est configurée pour négliger le fonctionnement du moyen de commutation (22) et considérer le fonctionnement comme une erreur lorsque le moyen de commutation (22) est actionné pendant une période plus courte qu'une deuxième période prédéterminée qui est plus courte que la première période prédéterminée.

2. Clé à télécommande (100) pour la moto telle que revendiquée dans la revendication 1, dans laquelle les moyens indicateurs (23, 24) sont configurés pour indiquer l'état du circuit de réception (26) lorsque les moyens de commutation (23, 24) sont mis en service en permanence pendant au moins la deuxième période prédéterminée et pendant une période plus courte que la première période prédéterminée.

3. Clé à télécommande (100) pour la moto telle que revendiquée dans l'une quelconque des revendications précédentes, dans laquelle le véhicule est une moto de type scooter (1).

4. Clé à télécommande (100) pour la moto telle que revendiquée dans l'une quelconque des revendications précédentes, dans laquelle les moyens indicateurs (23, 24) sont composés d'un couple de lampes à diode électroluminescente, où l'une des lampes s'allume en une couleur pour indiquer l'état d'arrêt du fonctionnement des moyens de transmission/de réception et l'autre des lampes s'allume en une autre couleur pour indiquer l'état d'activation du fonctionnement des moyens de transmission/de réception.
